# EUROPEAN PATENT APPLICATION

(11) **EP 4 231 249 A1**
(43) Date of publication of application: **23.08.2023**
(21) Application number: 23156517.7
(22) Date of filing: 14.02.2023
(51) Int. Cl.: G06V 10/25, G06V 10/24

(54) **SYSTEM AND METHOD FOR VERIFYING DISPLAY**

(30) Priority: 18.02.2022 IN 202211008686; 19.05.2022 US 202217748896
(71) Applicant: Rockwell Collins, Inc., Cedar Rapids, IA 52498 (US)
(72) Inventor: MUDAPAKA, Nitesh Teja, Hyderabad (IN); FORBES, Paul, Shellsburg, IA (US); DOCKEN, Troy, Cedar Rapids, IA (US); BOGGS, Christopher M., Gainesville, 20155 (US)
(74) Representative: Dehns

(57) **Abstract**

A system may include a camera (102) aimed at a display and configured to capture an image of the display, the display displaying a test image. The system may include a processor configured to: determine whether the display passes a verification test of correctly displaying a test image within a predetermined level of acceptance; and output a result of the verification test.

## Description

### CROSS-REFERENCE TO RELATED APPLICATIONS

The present application is related to and claims priority from: Indian Application Serial Number 202211008686, titled SYSTEM AND METHOD FOR VERIFYING DISPLAY, filed February 18, 2022.

### BACKGROUND

Currently, visual testing of avionics display applications is a resource-intensive activity in the verification process is predominantly a manual process, wherein the tester manually inspects results while following visual inspection instructions, and manual testing does not allow the ability to efficiently perform regular regression testing (e.g., nightly retests).

Currently, automated alternatives to visual testing of avionics display applications require precise pixel-wise comparisons of screen captures. However, such methods are not robust as there is no flexibility or ability for error handling, such as would be performed by a human. Additionally, the pixel-wise comparisons are not a human oriented language for test definition or result reporting. Further, available screen capture methods can vary between programs, which can introduce timing and/or fidelity issues, which can make it difficult to have a common testing approach. Existing screen capture methodology may have higher latency and may not represent an actual display image. It can be costly to curate and update accurate binary images. Existing methods do not capture content within the display image. A pass/fail for existing methods is based on a pixel mismatch, which provides little useful data for humans in case of a test fail, which requires manually inspecting the display image.

### SUMMARY

In one aspect, embodiments of the inventive concepts disclosed herein are directed to a system. The system may include at least one processor and a camera aimed at a display and configured to capture an image of the display displaying a test image. Then at least one processor may be configured to: receive the image from the camera; identify unique fiducial markers within the image; correct the perspective of the image to generate a corrected perspective image based on the unique fiducial markers; extract a widget of interest region from the at least one corrected perspective image, the widget region of interest being a region of interest where a widget is expected to or detected to reside; extract descriptors from the widget region of interest, the descriptors including at least one of: at least one color, at least one shape, or at least one character; compute similarity of the extracted descriptors against reference expected descriptor content; based on the computed similarity, determine whether the display passes a verification test of correctly displaying the test image within a predetermined level of acceptance; and output a result of the verification test.

In a further aspect, embodiments of the inventive concepts disclosed herein are directed to a system. The system may include at least one processor configured to: receive an image from a camera, the camera aimed at a display and configured to capture the image of the display, the display displaying a test image; identify unique fiducial markers within the image; correct a perspective of the image to generate a corrected perspective image based at least on the unique fiducial markers; extract a widget region of interest from the at least one corrected perspective image, the widget region of interest being a region of interest where a widget is expected to or detected to reside; extract descriptors from the widget region of interest, the descriptors including at least one of: at least one color, at least one shape, or at least one character; compute similarity of the extracted descriptors against reference expected descriptor content; based on the computed similarity, determine whether the display passes a verification test of correctly displaying the test image within a predetermined level of acceptance; and output a result of the verification test.

In a further aspect, embodiments of the inventive concepts disclosed herein are directed to a method. The method may include: receiving, by at least one processor, an image from a camera, the camera aimed at a display and configured to capture the image of the display, the display displaying a test image; identifying, by the at least one processor, unique fiducial markers within the image; correcting, by the at least one processor, a perspective of the image to generate a corrected perspective image based at least on the unique fiducial markers; extracting, by the at least one processor, a widget region of interest from the at least one corrected perspective image, the widget region of interest being a region of interest where a widget is expected to or detected to reside; extracting, by the at least one processor, descriptors from the widget region of interest, the descriptors including at least one of: at least one color, at least one shape, or at least one character; computing, by the at least one processor, similarity of the extracted descriptors against reference expected descriptor content; based on the computed similarity, determining, by the at least one processor, whether the display passes a verification test of correctly displaying the test image within a predetermined level of acceptance; and outputting, by the at least one processor, a result of the verification test.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a view of an exemplary embodiment of a system according to the inventive concepts disclosed herein.
FIG. 2 is a view of another exemplary embodiment of the system of FIG. 1 according to the inventive concepts disclosed herein.
FIG. 3 is a view of an aircraft computing device of the system of FIGS. 1-2 according to the inventive concepts disclosed herein.
FIG. 4 is a view of an exemplary embodiment of a cockpit of the aircraft of FIGS. 1-2 according to the inventive concepts disclosed herein.
FIG. 5 is a view of an exemplary embodiment of an image captured by the camera of FIGS. 1-2 and a corrected perspective image according to the inventive concepts disclosed herein.
FIG. 6 is a view of an exemplary embodiment of a portion of a displayed widget according to the inventive concepts disclosed herein.
FIG. 7 is a view of an exemplary embodiment of a portion of displayed descriptors according to the inventive concepts disclosed herein.
FIG. 8 is a diagram of an exemplary embodiment of a method according to the inventive concepts disclosed herein.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein may be directed to a system and method to determine whether a display passes a verification test of correctly displaying a test image within a predetermined level of acceptance and to output a result of the verification test. In some embodiments, determining whether a display passes a verification test of correctly displaying a test image within a predetermined level of acceptance and to output a result of the verification test may be or may include: determining whether a displayed widget passes a verification test of correctly displaying a test image including a widget within a predetermined level of acceptance and to output a result of the verification test. For example, a widget may be considered to be an interactable artifact within an avionics display which represents various parameters of sensors within an aircraft in real time.

Some embodiments may combine multiple visual widget verification methods in a unique flow that provides robustness and a more natural test language and test results. Some embodiments may apply a combination of image processing and computer vision (CV) techniques to regionalize an area of a display where a widget is detected to or expected to reside and may select an algorithm (e.g., a best algorithm) for performing a verification test of the display. Some embodiments may include a combination of region extraction methods and region description methods to be used in the verification process. Such combination of methods may allow for artificial human-style testing and error robustness in an automated test.

In some embodiments, the display verification test process may include at least one region extraction method, which allows an imperfectly captured display image to be corrected such that desired widget content (for the widget being tested) can be extracted from the corrected image. For example, a camera may be pointed at a display and capture at least one image (e.g., a still image or a stream of images) of the display having (e.g., on a bezel) or displaying fiducial markers in a displayed image. Some embodiments may include detecting the fiducial markers reliably to extract a target display active area from the camera feed. Some embodiments may include correcting a perspective of the captured image, such as by using homography (e.g., uniformity). Some embodiments may include deterministically segmenting the display image into at least one region of interest where at least one widget is expected or detected, which can significantly reduce the complexity of downstream tasks and improve processor overhead requirements and power efficiency. In some embodiments, object detection methods (e.g., utilizing artificial intelligence and/or machine learning) can be used to refine widget segmentation precision.

In some embodiments, the display verification test process may include at least one region description method. Such region description methods can be selected for a required test. For example, at least one region description method may include object detection, optical character recognition (OCR), and/or content-based image retrieval (CBIR). For example, objection detection can be used for extracting widgets from the image and/or to determine if there is a flag and/or a marker indicated in the widget. For example, OCR can be used for extracting characters (e.g., text) and to determine values displayed by the widget. For example, CBIR may be used for determining visual feature-based organization, such as to determine if the widget has a correct format.

Some embodiments may provide a human-like test architecture. For example, the test architecture can test if a widget shows up, test the widget's text, test the widgets color, and test the widget's shape. Some embodiments may have lower maintenance costs than other alternatives because such embodiments may not need pixel-perfect catalog for comparison to be created and/or updated.

Some embodiments may be utilized in the field without special equipment and/or interfaces. A low-cost camera can be used to capture an image of a display, identify a current state, and provide diagnoses and other useful information to a user.

Some embodiments may provide a customer faster time from implementation to delivery by using automated tests, lower total project cost, and/or automated tests that can allow for continuous test avoiding regression.

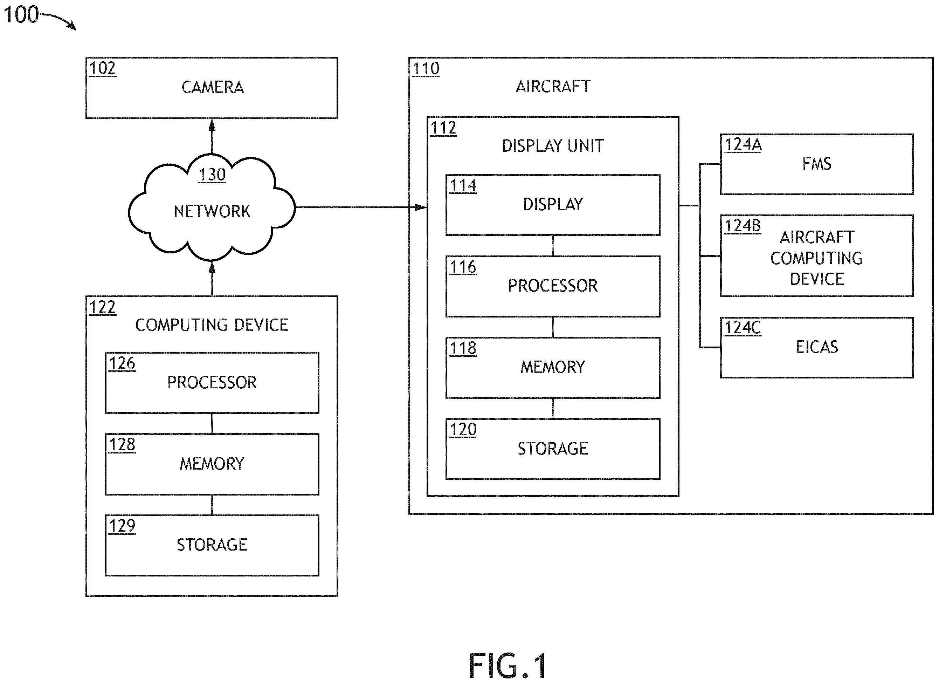

Referring generally to FIGS. 1-8, some embodiments include a system and a method configured to determine whether a display (e.g., an avionics display of an avionics display unit computing device) passes a verification test of correctly displaying a test image within a predetermined level of acceptance and to output a result of the verification test. While some embodiments are related to verification of an avionics display system, other embodiments may use the method for verification of any display system.

Referring now to FIGS. 1-3, an exemplary embodiment of a system 100 according to the inventive concepts disclosed herein is depicted. In some embodiments, the system 100 may include at least one camera 102, at least one aircraft 110, at least one computing device 122, and/or at least one network 130, some or all of which may be communicatively coupled at any given time.

In some embodiments, the aircraft 110 may include at least one user (e.g., flight crew and/or pilot(s)) (not shown), at least one display unit computing device 112, at least one aircraft computing device 124 (e.g., flight management system (FMS) computing device 124A, aircraft computing device 124B, and/or an engine indication and crew alerting system (EICAS) computing device 124C), and/or at least one user interface (not shown), some or all of which may be communicatively coupled at any given time.

The display unit computing device 112 may be implemented as any suitable computing device, such as a primary flight display (PFD) computing device and/or a multifunction window (MFW) display computing device. The display unit computing device 112 may be installed in the aircraft 110. As shown in FIG. 1, the display unit computing device 112 may include at least one display 114, at least one processor 116, at least one memory 118, and/or at least one storage 120, some or all of which may be communicatively coupled at any given time. For example, the at least one processor 116 may include at least one central processing unit (CPU), at least one graphics processing unit (GPU), at least one field-programmable gate array (FPGA), at least one application specific integrated circuit (ASIC), at least one digital signal processor, at least one virtual machine (VM) running on at least one processor, and/or the like configured to perform (e.g., collectively perform) any of the operations disclosed throughout. For example, the at least one processor 116 may include a CPU and a GPU configured to perform (e.g., collectively perform) any of the operations disclosed throughout. The processor 116 may be configured to run various software applications (e.g., a PFD application, and/or an MFW application) and/or computer code stored (e.g., maintained) in a non-transitory computer-readable medium (e.g., memory 118 and/or storage 120) and configured to execute various instructions or operations. The processor 116 may be configured to perform any or all of the operations disclosed throughout. For example, the processor 116 may be configured to: obtain the at least one file (e.g., from the computing device 122 or from an aircraft computing device (e.g., FMS computing device 124A, aircraft computing device 124B, or EICAS computing device 124C)); execute the hardware directives of the at least one file, which causes at least one test image to be drawn on a display 114 of the display unit computing device 512; receive test inputs (e.g., from the computing device 122 or from an aircraft computing device (e.g., FMS computing device 124A, aircraft computing device 124B, or EICAS computing device 124C)); generate test image data based at least on the test inputs; receive test image data (e.g., from an aircraft computer device 124 (e.g., 124A, 124B, 124C)) based at least on the test inputs; and/or output the test image data to the display 114, wherein the test image is part of or is derived from the test image data. The display 114 may be configured to display at least one test image.

In some embodiments, the at least one display unit computing device 112 for the aircraft 110 may be located off board of the aircraft 110, for example, if a given aircraft 110 is a remotely piloted and/or managed aircraft (e.g., an unmanned aerial vehicle (UAV) or a drone aircraft). In other embodiments, the at least one display unit computing device 112 may be implemented in any suitable vehicle. In other embodiments, the at least one display unit computing device 112 may be a non-vehicular display unit.

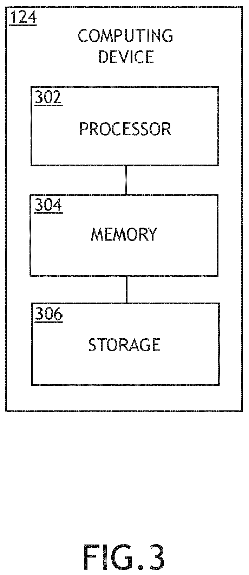

The aircraft 110 may further include at least one aircraft computing device 124 (e.g., FMS computing device 124A, aircraft computing device 124B, or EICAS computing device 124C)), which may be communicatively coupled to the display unit computing device 112. For example, any of the at least one aircraft computing device 124 (e.g., 124A, 124B, 124C) may be configured to provide the display unit computing device 112 with current aircraft (e.g., ownship) position and/or orientation information. The at least one aircraft computing device 124 (e.g., 124A, 124B, 124C) may be implemented as any suitable computing device, such as the FMS computing device 124A or the EICAS computing device 124C. For example, as shown in FIG. 3, the at least one aircraft computing device 124 (e.g., 124A, 124B, 124C) may include at least one processor 302 (e.g., at least one aircraft processor), at least one memory 304, and/or at least one storage 306, some or all of which may be communicatively coupled at any given time. For example, the at least one processor 302 may include at least one central processing unit (CPU), at least one graphics processing unit (GPU), at least one field-programmable gate array (FPGA), at least one application specific integrated circuit (ASIC), at least one digital signal processor, at least one image processor, at least one virtual machine (VM) running on at least one processor, and/or the like configured to perform (e.g., collectively perform) any of the operations disclosed throughout. For example, the at least one processor 302 may include a CPU and a GPU configured to perform (e.g., collectively perform) any of the operations disclosed throughout. The processor 302 may be configured to run various software applications or computer code stored (e.g., maintained) in a non-transitory computer-readable medium (e.g., memory 304 and/or storage 306) and configured to execute various instructions or operations. The processor 302 of the aircraft computing device 124 may be configured to perform any or all of the operations disclosed throughout. For example, the processor 302 of the computing device 124 may be configured to: receive test inputs (e.g., from the computing device 122); generate test image data based at least on the test inputs; and output the test image data to the display unit computing device 112, wherein the test image is part of or is derived from the test image data. In some embodiments, the at least one aircraft computing device 124 (e.g., FMS computing device 124A, aircraft computing device 124B, or EICAS computing device 124C) may be part of the display unit computing device 122, and/or the display unit computing device 122 may have the functionality of (e.g., programmed to have the functionality of) the at least one aircraft computing device 124 (e.g., FMS computing device 124A, aircraft computing device 124B, or EICAS computing device 124C).

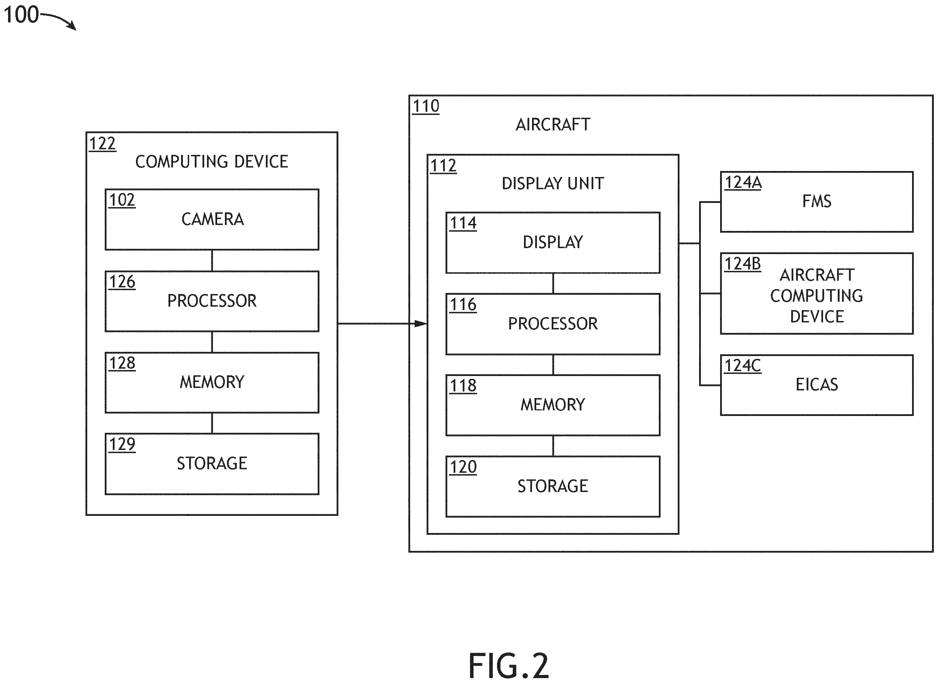

For example, the camera 102 may be aimed at the display 114 and configured to capture an image of the display 114, the display 114 displaying the test image. In some embodiments, the camera 102 is part of a computing device, which can include at least one processor and memory, such as part of the computing device 122 as shown in FIG. 2.

In some embodiments, the computing device 122 may be any suitable computing device. The at least one computing device 122 may be implemented as any suitable computing device, such as a host, personal, or a mobile computing device located onboard, offboard, and/or located remotely from the aircraft 110. In some embodiments, the computing device 122 is at least one of the aircraft computing devices 124. The at least one computing device 122 may include any or all of the elements, as shown in FIGS. 1 and 2. For example, the computing device 122 may include at least one processor 126, at least one memory 128, the camera 102 (as shown in FIG. 2), and/or at least one storage 129, some or all of which may be communicatively coupled at any given time. For example, the at least one processor 126 may include at least one central processing unit (CPU), at least one graphics processing unit (GPU), at least one field-programmable gate array (FPGA), at least one application specific integrated circuit (ASIC), at least one digital signal processor, at least one image processor, at least one virtual machine (VM) running on at least one processor, and/or the like configured to perform (e.g., collectively perform) any of the operations disclosed throughout. For example, the at least one processor 126 may include a CPU and a GPU configured to perform (e.g., collectively perform) any of the operations disclosed throughout. The processor 126 may be configured to run various software applications or computer code stored (e.g., maintained) in a non-transitory computer-readable medium (e.g., memory 128 and/or storage 129) and configured to execute various instructions or operations. The processor 126 of the computing device 122 may be configured to perform any or all of the operations disclosed throughout. For example, the processor 126 of the computing device 122 may be configured to: receive the image from the camera; identify unique fiducial markers within the image; correct a perspective of the image to generate a corrected perspective image based at least on the unique fiducial markers; extract a widget region of interest from the at least one corrected perspective image, the widget region of interest being a region of interest where a widget is expected to or detected to reside; extract descriptors from the widget region of interest, the descriptors including at least one of: at least one color, at least one shape, or at least one character; compute similarity of the extracted descriptors against reference expected descriptor content; based on the computed similarity, determine whether the display passes a verification test of correctly displaying the test image within a predetermined level of acceptance; and/or output a result of the verification test.

In some embodiments, the at least one processor 126 is further configured to: upon a determination that the display passes a verification test of correctly displaying the test image within a predetermined level of acceptance, output a passing result of the verification test, wherein the passing result may include a report setting forth metrics and/or content that passed the verification test.

In some embodiments, the at least one processor 126 is further configured to: upon a determination that the display fails a verification test of correctly displaying the test image within a predetermined level of acceptance, output a failure result of the verification test, wherein the failure result may include a report setting forth metrics and/or content that failed the verification test. In response to the failure result, a user may be able to review the report to quickly understand what solution can rectify the failure, whether software needs to be modified, whether settings need to be changed, or whether hardware needs to be replaced.

In some embodiments, the at least one processor 126 is further configured to: correct, by utilizing homography, the perspective of the image to generate the corrected perspective image based at least on the unique fiducial markers; extract the widget region of interest from the at least one corrected perspective image based at least on at least one of the expected region of interest for the widget or by using objection detection to detect the widget; extract, by utilizing at least one of objection detection or optical character recognition (OCR), the descriptors from the widget region of interest; and/or compute the similarity of the extracted descriptors against the reference expected descriptor content by utilizing at least one of content-based image retrieval (CBIR) or a direct comparison of the extracted descriptors and the reference expected descriptor content.

In some embodiments, the at least one processor 126 is further configured to: receive the image from the camera 102 via the at least one network 130.

In some embodiments, the at least one display unit computing device 112, the camera 102, the at least one aircraft computing device 124, and/or the computing device 122 may be implemented as a single computing device or any number of computing devices configured to perform (e.g., collectively perform if more than one computing device) any or all of the operations disclosed throughout.

At least one processor (e.g., the at least one processor 126, the at least one processor 116, and/or the at least one processor 302) may be configured to perform (e.g., collectively perform) any or all of the operations disclosed throughout.

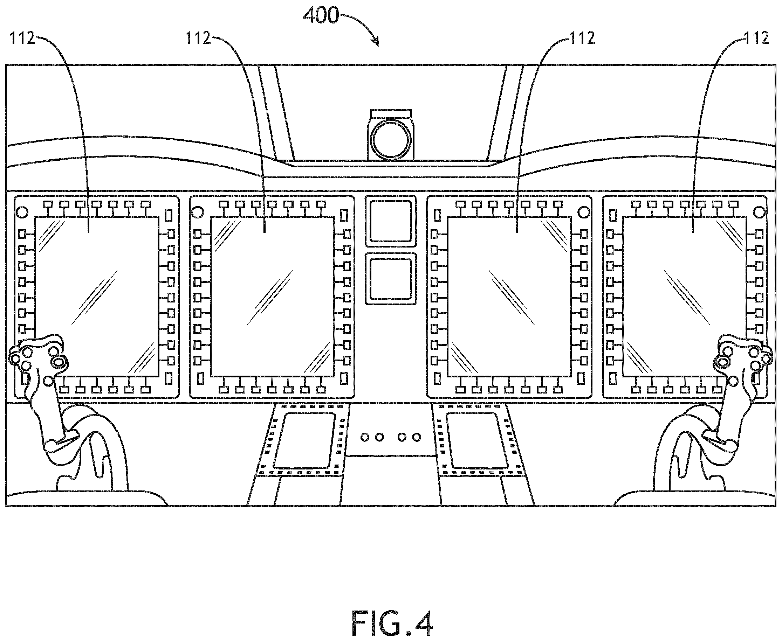

Referring now to FIG. 4, an exemplary embodiment of a cockpit 400 including display unit computing devices 112 according to the inventive concepts disclosed herein is depicted.

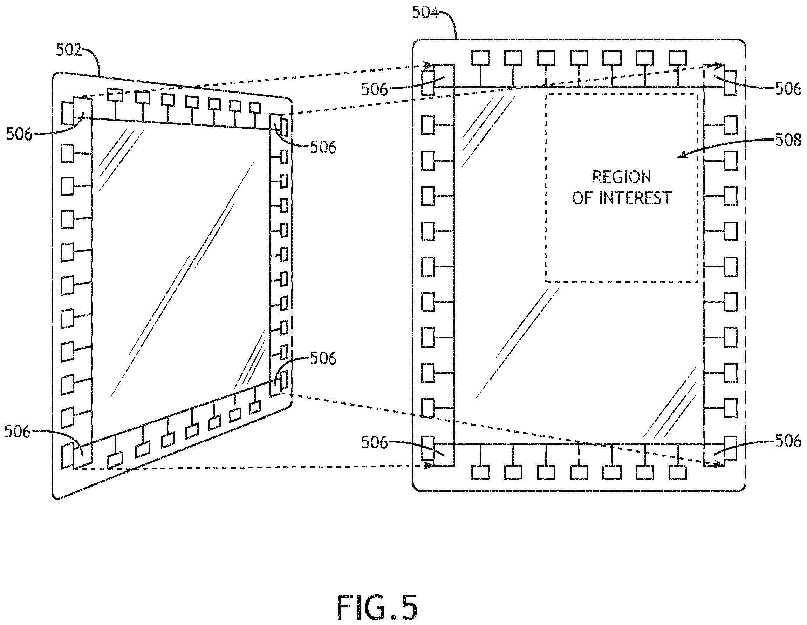

Referring now to FIG. 5, an exemplary embodiment of an image 502 captured by the camera 102 and a corrected perspective image 504 according to the inventive concepts disclosed herein is depicted. The images 502 and/or 504 may include fiduciary markers 506 which can be used to correct a perspective of the image 502. The corrected perspective image 504 may include a widget region of interest 508 being a region of interest where a widget is expected to or detected to reside.

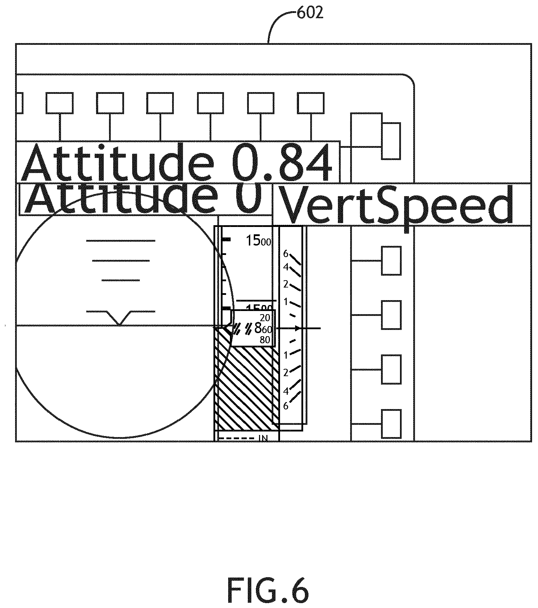

Referring now to FIG. 6, an exemplary embodiment of a portion of a displayed widget 602 according to the inventive concepts disclosed herein is depicted.

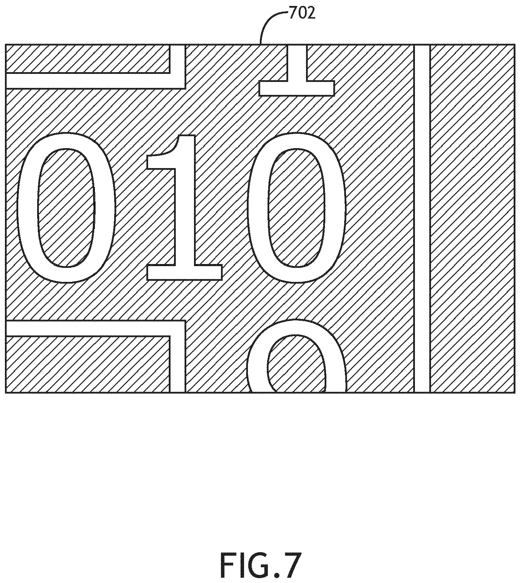

Referring now to FIG. 7, an exemplary embodiment of a portion of a displayed descriptors 702 according to the inventive concepts disclosed herein is depicted. The descriptors 702 may include at least one color, at least one shape, or at least one character.

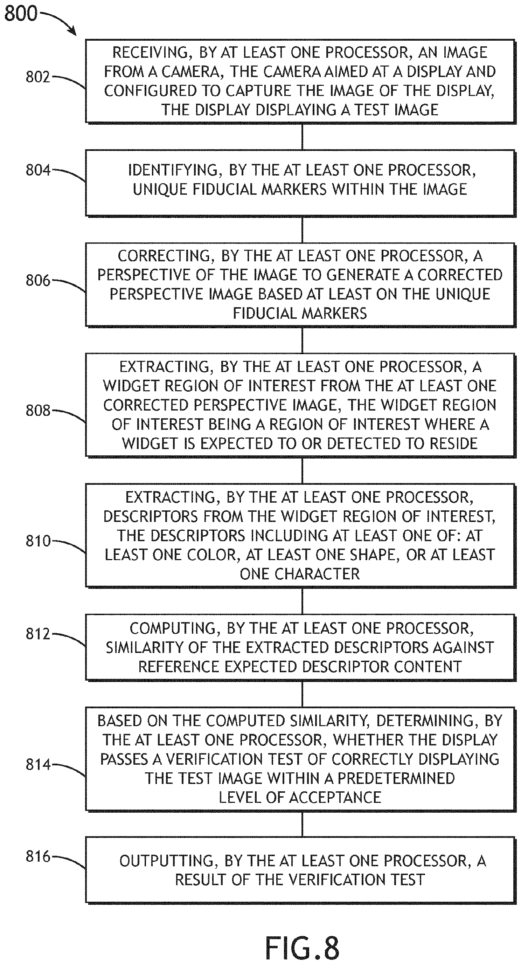

Referring now to FIG. 8, an exemplary embodiment of a method 800 according to the inventive concepts disclosed herein may include one or more of the following steps. Additionally, for example, some embodiments may include performing one or more instances of the method 800 iteratively, concurrently, and/or sequentially. Additionally, for example, at least some of the steps of the method 800 may be performed in parallel and/or concurrently. Additionally, in some embodiments, at least some of the steps of the method 800 may be performed non-sequentially.

A step 802 may include receiving, by at least one processor, an image from a camera, the camera aimed at a display and configured to capture the image of the display, the display displaying a test image.

A step 804 may include identifying, by the at least one processor, unique fiducial markers within the image.

A step 806 may include correcting, by the at least one processor, a perspective of the image to generate a corrected perspective image based at least on the unique fiducial markers.

A step 808 may include extracting, by the at least one processor, a widget region of interest from the at least one corrected perspective image, the widget region of interest being a region of interest where a widget is expected to or detected to reside.

A step 810 may include extracting, by the at least one processor, descriptors from the widget region of interest, the descriptors including at least one of: at least one color, at least one shape, or at least one character.

A step 812 may include computing, by the at least one processor, similarity of the extracted descriptors against reference expected descriptor content.

A step 814 may include based on the computed similarity, determining, by the at least one processor, whether the display passes a verification test of correctly displaying the test image within a predetermined level of acceptance.

A step 816 may include outputting, by the at least one processor, a result of the verification test.

Further, the method 800 may include any of the operations disclosed throughout.

As will be appreciated from the above, embodiments of the inventive concepts disclosed herein may be directed to system and method to determine whether a display passes a verification test of correctly displaying a test image within a predetermined level of acceptance and to output a result of the verification test.

As used throughout and as would be appreciated by those skilled in the art, "at least one non-transitory computer-readable medium" may refer to as at least one non-transitory computer-readable medium (e.g., at least one computer-readable medium implemented as hardware; e.g., at least one non-transitory processor-readable medium, at least one memory (e.g., at least one nonvolatile memory, at least one volatile memory, or a combination thereof; e.g., at least one random-access memory, at least one flash memory, at least one read-only memory (ROM) (e.g., at least one electrically erasable programmable read-only memory (EEPROM)), at least one on-processor memory (e.g., at least one on-processor cache, at least one on-processor buffer, at least one on-processor flash memory, at least one on-processor EEPROM, or a combination thereof), or a combination thereof), at least one storage device (e.g., at least one hard-disk drive, at least one tape drive, at least one solid-state drive, at least one flash drive, at least one readable and/or writable disk of at least one optical drive configured to read from and/or write to the at least one readable and/or writable disk, or a combination thereof), or a combination thereof).

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ..., one hundred, or more.

In the present disclosure, the methods, operations, and/or functionality disclosed may be implemented as sets of instructions or software readable by a device. Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the inventive concepts disclosed herein. The accompanying claims may present elements of the various steps in a sample order, and are not necessarily meant to be limited to the specific order or hierarchy presented.

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the broad scope and coverage of the inventive concepts disclosed and claimed herein.

## Claims

1. A system, comprising:
a camera (102) aimed at a display and configured to capture an image of the display, the display displaying a test image;
at least one processor configured to:
receive the image from the camera (102);
identify unique fiducial markers within the image;
correct a perspective of the image to generate a corrected perspective image based at least on the unique fiducial markers;
extract a widget region of interest from the at least one corrected perspective image, the widget region of interest being a region of interest where a widget is expected to or detected to reside;
extract descriptors from the widget region of interest, the descriptors including at least one of: at least one color, at least one shape, or at least one character;
compute similarity of the extracted descriptors against reference expected descriptor content;
based on the computed similarity, determine whether the display passes a verification test of correctly displaying the test image within a predetermined level of acceptance; and
output a result of the verification test.

2. The system of claim 1, further comprising a display unit computing device (112) comprising the display and at least one display unit processor, wherein the display is configured to display the test image.

3. The system of claim 2, wherein the display unit computing device (112) is installed in an aircraft.

4. The system of claim 3, further comprising at least one flight processor installed in the aircraft, wherein the at least one flight processor is configured to: receive test inputs; generate test image data based at least on the test inputs; and output the test image data to the display unit computing device (112);
wherein the test image is part of or is derived from the test image data.

5. The system of claim 4, further comprising an aircraft computing device comprising the at least one flight processor, wherein the aircraft computing device is a flight management system "FMS" computing device or an engine indication and crew alerting system "EICAS" computing device, or wherein the at least one processor is further configured to:
correct, by utilizing homography, the perspective of the image to generate the corrected perspective image based at least on the unique fiducial markers;
extract the widget region of interest from the at least one corrected perspective image based at least on at least one of the expected region of interest for the widget or by using objection detection to detect the widget;
extract, by utilizing at least one of objection detection or optical character recognition "OCR", the descriptors from the widget region of interest; and
compute the similarity of the extracted descriptors against the reference expected descriptor content by utilizing at least one of content-based image retrieval "CBIR" or a direct comparison of the extracted descriptors and the reference expected descriptor content.

6. The system of claim 3, wherein the at least one display unit processor of the display unit computing device (112) is configured to: receive test inputs; generate test image data based at least on the test inputs; and output the test image data to the display, wherein the test image is part of or is derived from the test image data.

7. The system of claim 6, wherein the at least one processor is further configured to:
correct, by utilizing homography, the perspective of the image to generate the corrected perspective image based at least on the unique fiducial markers;
extract the widget region of interest from the at least one corrected perspective image based at least on at least one of the expected region of interest for the widget or by using objection detection to detect the widget;
extract, by utilizing at least one of objection detection or optical character recognition "OCR", the descriptors from the widget region of interest; and
compute the similarity of the extracted descriptors against the reference expected descriptor content by utilizing at least one of content-based image retrieval "CBIR" or a direct comparison of the extracted descriptors and the reference expected descriptor content.

8. The system of any preceding claim, wherein the at least one processor is configured to receive the image from the camera (102) via at least one network, and/or comprising a computing device comprising the camera (102) and the at least one processor.

9. The system of any preceding claim, wherein the at least one processor is further configured to: correct, by utilizing homography, the perspective of the image to generate the corrected perspective image based at least on the unique fiducial markers.

10. The system of any preceding claim, wherein the at least one processor is further configured to: extract the widget region of interest from the at least one corrected perspective image based at least on at least one of the expected region of interest for the widget or by using objection detection to detect the widget, and optionally wherein the at least one processor is further configured to: extract the widget region of interest from the at least one corrected perspective image based at least on at least one of the expected region of interest for the widget or by using objection detection to detect the widget.

11. The system of any preceding claim, wherein the at least one processor is further configured to: extract, by utilizing at least one of objection detection or optical character recognition "OCR", the descriptors from the widget region of interest.

12. The system of any preceding claim, wherein the at least one processor is further configured to: extract, by utilizing objection detection and OCR, the descriptors from the widget region of interest.

13. The system of any preceding claim, wherein the at least one processor is further configured to: compute the similarity of the extracted descriptors against the reference expected descriptor content by utilizing content-based image retrieval "CBIR", or wherein the at least one processor is further configured to: compute the similarity of the extracted descriptors against the reference expected descriptor content by utilizing a direct comparison of the extracted descriptors and the reference expected descriptor content, or wherein the at least one processor is further configured to:
correct, by utilizing homography, the perspective of the image to generate the corrected perspective image based at least on the unique fiducial markers;
extract the widget region of interest from the at least one corrected perspective image based at least on at least one of the expected region of interest for the widget or by using objection detection to detect the widget;
extract, by utilizing at least one of objection detection or optical character recognition "OCR", the descriptors from the widget region of interest; and
compute the similarity of the extracted descriptors against the reference expected descriptor content by utilizing at least one of content-based image retrieval "CBIR" or a direct comparison of the extracted descriptors and the reference expected descriptor content.

14. A system, comprising:
at least one processor configured to:
receive an image from a camera (102), the camera (102) aimed at a display and configured to capture the image of the display, the display displaying a test image;
identify unique fiducial markers within the image;
correct a perspective of the image to generate a corrected perspective image based at least on the unique fiducial markers;
extract a widget region of interest from the at least one corrected perspective image, the widget region of interest being a region of interest where a widget is expected to or detected to reside;
extract descriptors from the widget region of interest, the descriptors including at least one of: at least one color, at least one shape, or at least one character;
compute similarity of the extracted descriptors against reference expected descriptor content;
based on the computed similarity, determine whether the display passes a verification test of correctly displaying the test image within a predetermined level of acceptance; and
output a result of the verification test.

15. A method, comprising:
receiving, by at least one processor, an image from a camera (102), the camera (102) aimed at a display and configured to capture the image of the display, the display displaying a test image;
identifying, by the at least one processor, unique fiducial markers within the image;
correcting, by the at least one processor, a perspective of the image to generate a corrected perspective image based at least on the unique fiducial markers;
extracting, by the at least one processor, a widget region of interest from the at least one corrected perspective image, the widget region of interest being a region of interest where a widget is expected to or detected to reside;
extracting, by the at least one processor, descriptors from the widget region of interest, the descriptors including at least one of: at least one color, at least one shape, or at least one character;
computing, by the at least one processor, similarity of the extracted descriptors against reference expected descriptor content;
based on the computed similarity, determining, by the at least one processor, whether the display passes a verification test of correctly displaying the test image within a predetermined level of acceptance; and
outputting, by the at least one processor, a result of the verification test.
